# EUROPEAN PATENT APPLICATION

(11) **EP 0 602 692 A2**
(43) Date of publication of application: **22.06.1994**
(21) Application number: 93202978.8
(22) Date of filing: 25.10.1993
(51) Int. Cl.: F02D 41/22, F02D 41/34

(54) **Method and apparatus for controlling a vehicle engine**

(30) Priority: 14.11.1992 GB 9223918
(71) Applicant: DELCO ELECTRONICS CORPORATION, Kokomo Indiana 46902 (US)
(72) Inventor: Keskula, Donald Henry, Thorpe, St Andrew, Norwich NR7 9LJ (GB)
(74) Representative: Denton, Michael John

(57) **Abstract**

A camshaft wheel (10) adapted to be fitted to an engine camshaft (12) includes a plurality of indentations (14,16,18,20) providing a plurality of equally spaced edges (22,24) and a synchronising edge (28). Each of the edges (22,24) is adapted in use to indicate that an associated piston is approaching top dead centre. The camshaft wheel (10) can be used as a backup facility for a crankshaft wheel when the crankshaft wheel or any of the components associated with it are faulty or otherwise unreliable. The camshaft wheel (10) is otherwise used in conjunction with the crankshaft wheel (52) to determine engine phase as soon as crankshaft signal synchronisation occurs.

## Description

The present invention relates to a method and apparatus for controlling a vehicle engine, and in particular the timing of engine operating events.

Engine operating events, such as fuel injection and spark production, must generally occur at accurately specified times in the engine cycle, and in particular at accurately specified positions of the engine pistons. A measure the engine position, and hence of the position of the pistons, is commonly obtained by means of a toothed wheel fixed to and adapted to rotate with the engine crankshaft. The toothed wheel is normally a disc having a plurality of radially extending projections or teeth at regularly spaced intervals around its perimeter. A synchronising point is also provided on the toothed wheel, which may be in the form of a couple of missing teeth.

A suitable sensor placed at the perimeter of the toothed wheel produces a pulsed signal as the teeth move past it and a level signal on the passage of the two missing teeth. As the pulses in this signal are directly related to the teeth of the toothed wheel, they can give an accurate indication of the angular position of the crankshaft and also of the speed of rotation of the crankshaft, by determining the frequency of the pulses.

Since in a normal four-stroke engine the crankshaft rotates twice for every cycle of the engine, it is necessary, in addition to measuring the position of the crankshaft, to determine in which half of the engine cycle each revolution of the crankshaft occurs. This can be achieved by monitoring the position of the camshaft, for example, by means of a camshaft wheel shaped to provide an indication of whether the engine is in the first of second half of its cycle. Thus, by use of signals from both the crankshaft and camshaft sensors, it is possible to determine accurately the position of the engine.

The sensor commonly used for sensing the crankshaft wheel is an inductive-typed sensor.

A problem which can occur with the above-described system is that if the toothed wheel, the crankchaft sensor or its associated wiring fails, the engine becomes inoperable. Another problem is that during starting of the engine, when engine speeds are quite low, the above-described speed dependent cranksahft sensing apparatus does not provide a reliable signal.

The present invention seeks to provide an improved method and apparatus for controlling a vehicle engine and a camshaft wheel therefor.

According to an aspect of the present invention, there is provided a method of controlling the timing of engine operating events in an engine as specified in claim 1.

Even on failure of the crankshaft sensing means or when the the crankshaft sensing means is unreliable, for example at low engine speeds, the engine does not become inoperable.

In the embodiment described below, the system assumes that the crankshaft sensing means is operating correctly until proven otherwise. Other possibilities include a) to assume that the crankshaft sensing means is incorrect, and thus to use the camshaft sensing means only, until it is proven that the crankshaft sensing means is not faulty or otherwise unreliable, and b) to use the sensing means which synchronises first and then to switch to the crankshaft sensing means as soon as possible. The choice of which of these possibilities to use will be dependent on circumstances, as will be apparent to the skilled person.

When the crankshaft sensing means is adapted to produce a crankshaft synchronising signal, the method preferably comprises the step of determining that the crankshaft sensing is faulty or otherwise unreliable when a crankshaft synchronising signal is not produced within a preset period. Preferably, the camshaft synchronising signal is used as the period reference.

Advantageously, the method comprises the step of determining that the crankshaft sensing means is faulty or otherwise unreliable when the crankshaft synchronising signal is not produced within the preset period a predetermined number of times. This ensures that the determination of the state of the crankshaft sensing means is not corrupted by noise and the like.

In an embodiment, the method includes the step of measuring the engine speed and determining that the crankshaft sensing means is unreliable if engine speed is less than a predetermined minimum engine speed. It is common for the crankshaft sensing means to include an inductive device, which is unreliable at low speeds, therefore, at low engine speeds, the signal from the camshaft sensor, which is typically a Hall device, is a better choice.

When the camshaft wheel comprises camshaft synchronising means providing a camshaft synchronising signal, the method may comprise the step of synchronising to the engine position on the basis of the camshaft synchronising signal when the engine speed is below a or the minimum engine speed or when the signal from the crankshaft sensor is determined to be faulty or otherwise unreliable. The provision of synchronising means on the camshaft wheel is particularly advantageous since it allows the engine to be operated in as normal a manner as possible, and still allows independent fuel injection and spark production.

According to another aspect of the present invention, there is provided apparatus for controlling the timing of engine operating events as specified in claim 8.

According to another aspect of the present invention, there is provided a camshaft wheel as specified in claim 12.

Such a camshaft wheel can be used independently of any other engine position sensor to indicate the position of the engine, and is particularly useful in a backup facility when the crankshaft sensing means is faulty or otherwise unreliable.

The camshaft wheel preferably has formed therein a plurality of spaced indentations, each indentation including a first edge which during normal rotation of the camshaft wheel is a leading edge of the indentation and a second edge which during normal rotation of the camshaft wheel is a trailing edge of the indentation, each of a plurality of indicating means including the first and/or second edges of an indentation. This is a particularly advantageous and simple arrangement.

Advantageously, synchronising means may be provided comprising a synchronising indentation including a synchronising edge, the synchronising edge having a spacing different to the spacing between each indicating means. Preferably, the synchronising edge is, during normal rotation of the camshaft wheel, the leading edge of the synchronising indentation; a first of the indicating means forming the trailing edge of the synchronising indentation, each of the other indicating means forming the leading edge of a respective indentation. In this manner, a simple detecting system, for example in the form of software, can be developed to detect the synchronising point and the positions of the pistons.

The provision of first and second portions on the camshaft wheel can be useful when the camshaft wheel is used in conjunction with crankshaft sensing means, in which case it will normally only be used to indicate whether the engine is in the first or second half of the engine cycle, and on failure of the crankshaft sensing means as a replacement thereof.

An embodiment of the present invention is described below, by way of illustration only, with reference to the accompanying drawings, in which:
Figure 1 is a plan view of an embodiment of camshaft wheel for a four-cylinder engine;
Figure 2 is a block diagram of the principal components of an embodiment of apparatus for controlling a vehicle engine;
Figure 3a shows a signal produced by a crankshaft sensor for a toothed wheel having 60 virtual teeth;
Figure 3b shows a signal produced by a camshaft sensor associated with the camshaft wheel of Figure 1;
Figure 4 shows an overview of an embodiment of a plurality of flow charts of subroutines for use with the camshaft wheel of Figure 1;
Figures 5a and 5b show an embodiment of flow chart of a subroutine carried out during starting up of the engine and in the backup mode; and
Figures 6a and 6b show an embodiment of flow chart of a cam check subroutine of Figure 4.

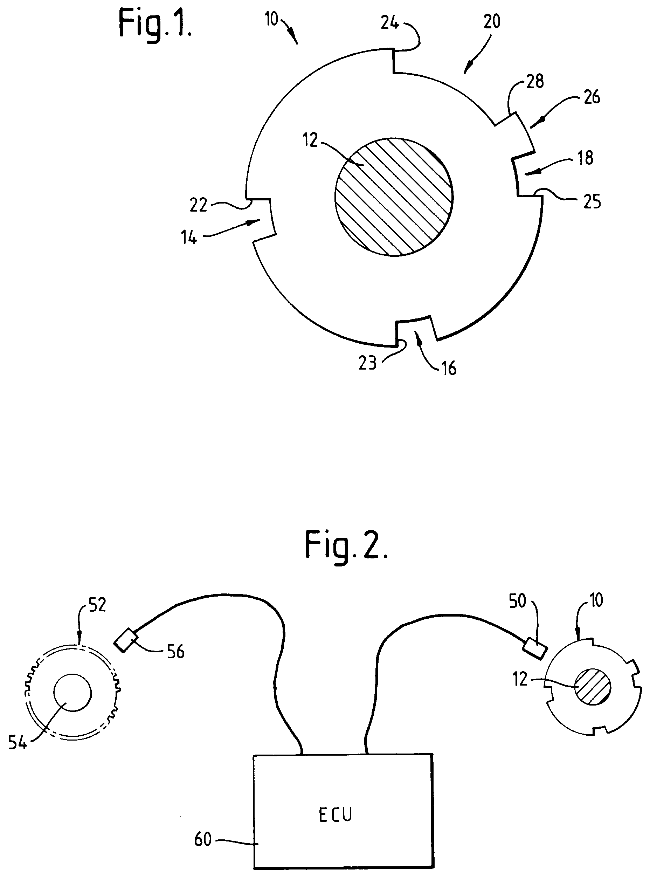

The embodiment described below is adapted for a four-cylinder engine. It comprises, in this example, a crankshaft wheel, of known form, fixed to the engine crankshaft and having 60 virtual teeth, of which 58 are actual teeth and two are missing to provide a synchronising point. In addition to the crankshaft wheel, there is provided a camshaft wheel, shown in Figure 1, which is adapted to indicate in which half of an engine cycle each revolution of the crankshaft occurs, and to provide a backup timing facility on failure of the toothed wheel, the sensor associated with the toothed wheel, the wiring or the electronic control module interface.

Referring to Figure 1, a camshaft wheel 10, fixed to an engine camshaft 12 so that in use it rotates with the camshaft 12, comprises a plurality of indentations or slots 14,16,18,20 located at predetermined angular positions around its circumference. Respective radially extending edges 22, 23, 25 of adjacent slots 14,16,18 are spaced substantially 90⁰ from one another. A radially extending edge 24 of longer slot 16 is spaced from the edges 22, 25 of its adjacent slots 14,18 also by substantially 90⁰.

The other edges of the slots 14 to 20, apart from the synchronisation edge 28 which is described below, are not critical to the operation of the camshaft wheel 10. In this embodiment, the three slots 14,16,18 have each been chosen to subtend an arc of substantially 17⁰, and slot 20 to subtend an arc of substantially 56⁰ and to be separated from the slot 18 by a portion 26 of the wheel which extends over an arc of substantially 17⁰.

In practice, the actual angular position of the critical edges of the camshaft wheel 10 are adjusted to account for the response times of the sensing apparatus, although this could also be done by means of a correction in software.

The non-critical edges of the camshaft wheel 10 can be adjusted to balance the wheel.

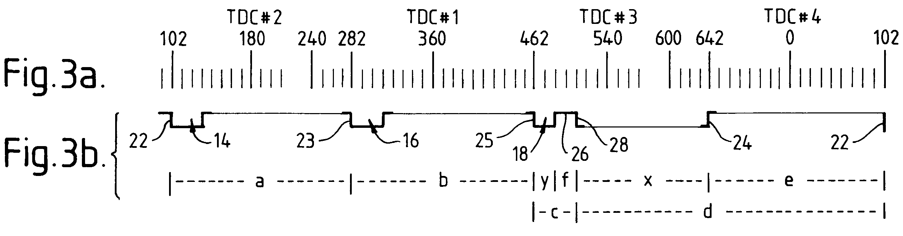

The purpose of this construction of the camshaft wheel 10 is described below with reference to Figures 3a and 3b.

Referring now to Figure 2, the principal components of the apparatus for controlling the engine are shown in very simplified form.

A camshaft sensor 50, which in this embodiment is a Hall device, is disposed adjacent the camshaft wheel 10 so as to produce a signal representative of the passage of the slots 14 to 20 across the sensor 50. A crankshaft sensor 56, which in this embodiment is a variable reluctance sensor, is disposed adjacent a toothed wheel 52 fixed to engine crankshaft 54 and having 60 virtual teeth of which 58 are actual teeth and two are missing teeth, as explained above. The crankshaft sensor 56 is located so as to be adjacent tooth 20 (measured from the tooth immediately following the two missing teeth) when cylinders 1 and 4 are at top dead centre.

The output signals from both sensors 50,56 are connected to an engine control unit 60 which processes the signals to determine the times for initiating engine operating events, such as the start of fuel injection and spark production.

These output signals and the relationship between them are illustrated in Figures 3a and 3b.

Referring to Figure 3a, since the crankshaft 54 rotates at twice the rotational speed of the engine, the toothed wheel 52 will rotate 720⁰ per engine cycle. During each engine cycle, the toothed wheel 52 provides a signal which includes (i) a sequence of pulses each of which is representative of substantially 6⁰ of rotation of the crankshaft 54, (ii) a first gap of substantially 18⁰ before the pulse representative of 240⁰ from top dead centre of cylinder 4, and (iii) a second gap, also of substantially 18⁰, before the pulse representative of 600⁰ from top dead centre of cylinder 4.

These gaps in the signal from the toothed wheel sensor 56 are used to synchronise the electronic control unit 60 to the position of the engine, while the pulses are used to determine precisely the position and speed of the engine so that each engine operating event can be initiated accurately at the correct point in the engine cycle. For example, a spark in cylinder 4 can be generated accurately at the desired angle on the basis of the pulses from the toothed wheel 52.

The signal produced by the camshaft wheel 10 is shown in Figure 3b. Since the camshaft 12 rotates at half the speed of the engine, the camshaft wheel 10 will rotate once for every two revolutions (720⁰) of the toothed wheel 52. The arrangement of the slots 14 to 20 is such that the first time the two missing teeth are detected in an engine cycle (just before 240⁰), the signal from the sensor 50 is high since it is adjacent the portion of the camshaft wheel 10 between the two slots 14,16, and the second time the two missing teeth are detected in the engine cycle, the signal from the sensor 50 is low since it is adjacent the slot 20. Thus, the electronic control unit 60 can determine at the detection of the two missing teeth whether the next cylinder to reach top dead centre is cylinder 1 or cylinder 4.

Furthermore, the falling edge in the camshaft sensor signal produced by edge 22 of slot 14 is aligned with the tooth at 102⁰ from top dead centre of cylinder 4, while that of edge 23 of slot 16 is aligned with the tooth at 282⁰, that of edge 25 of slot 18 is aligned with the tooth at 462⁰, that of edge 28 is aligned with the tooth at 530⁰ and the rising edge produced by edge 24 is aligned with the tooth at 642⁰. Thus, edge 22 of slot 14 indicates that cylinder 2 is approaching top dead centre, edge 23 of slot 16 indicates that cylinder 1 is approaching top dead centre, edge 25 of slot 18 indicates that cylinder 3 is approaching top dead centre, while edge 24 indicates that cylinder 4 is approaching top dead centre.

Thus, the falling and rising edges produced at regular intervals by the edges 22, 23, 24, 25 can be used to determine the next cylinder to reach top dead centre. This enables the camshaft wheel 10 to be used by itself to determine the timing of engine operating events, for example as a backup facility on failure of the crankshaft sensor 56 or of any of the components associated with it, as described below.

During normal operation of the engine, the electronic control unit 60 operates as follows. At 102⁰ and 282⁰ after top dead centre, that is at teeth 37 and 7 respectively, the electronic control unit 60 generates two reference pulses (REF EVENT pulses) which are used as a base point for timing the initiation of fuel injection and the production of a spark in each of the engine cylinders, for calculating the speed of the engine (RPM), for triggering the synchronous reading of the inputs to the electronic control unit 60, and for controlling other synchronous events. The two consecutive missing teeth (just before 240⁰ and 600⁰ in Figure 3a) allow the electronic control unit 60 to identify tooth number 1 and to synchronise itself with respect to cylinder 1 or 4, and to differentiate between cylinders 1 and 4 by the additional information obtained from the camshaft wheel. That is, the routine reads the signal from the camshaft sensor 50 each time the two missing teeth on the toothed wheel 52 are detected, and if the camshaft sensor signal is high, it determines that cylinder 1 is approaching top dead centre, while if this signal is low, it determines that cylinder 4 is approaching top dead centre.

On the other hand, when the ignition is first switched on, the electronic control unit 60 monitors both the signal from the crankshaft sensor 56 and the edges of the signal from the camshaft sensor 50. Since the crankshaft sensor used in this embodiment is a variable reluctance sensor which gives an output having a magnitude dependent upon the speed of the teeth passing across the sensor, the electronic control unit 60 initially calculates the speed of the engine on the basis of the falling edges of the camshaft sensor signal (which, being a Hall device is not dependant on speed of the camshaft wheel 10). During cranking of the engine, at which time the engine speed is increasing from 0 RPM to a cranking speed, the electronic control unit 60 does not control the engine until the engine speed reaches 60 RPM, although up to this speed it calculates the engine speed and engine position on the basis of the camshaft sensor signal, which becomes reliable at around 10 to 20 RPM. Until the engine speed reaches about 60 RPM, the crankshaft sensor signal is ignored. In connection with this, the electronic control unit 60 synchronises itself from the edge 28 and also, once synchronised, calculates the engine speed from the edges 22 to 25.

Once the engine speed rises above the minimum speed, the electronic control unit 60 monitors the crankshaft sensor signal to count the number of engine cycles (measured from the camshaft sensor signal) occurring between the detection of two consecutive synchronising signals obtained from the crankshaft sensor 56 (that is, two consecutive detections of the missing teeth). If the count reached exceeds a predetermined count, the electronic control unit 60 determines that there is failure of the crankshaft sensor signal and runs the engine from the camshaft sensor signal alone until the ignition is next switched on. This avoids the possibility of erratic operation of the engine due to the routine switching between the crankshaft sensor signal and the camshaft sensor signal.

If the electronic control unit 60 determines on ignition that the crankshaft sensor signal is not faulty, it runs the engine on the basis of this signal, using also the signal from the camshaft sensor to distinguish between cylinders 1 and 4 at each detection of the missing teeth, while carrying out periodic checks on the crankshaft sensor signal.

During running of engine, the crankshaft sensor signal is considered to have failed when the following conditions have been met: a) the sum of missing plus extra crankshaft sensor pulses, that is the detected number of teeth of the toothed wheel between successive synchronisations of the crankshaft sensor 56, is greater than a predetermined number, and b) condition a) occurs consecutively for a predetermined number of engine cycles.

On failure of the crankshaft sensor signal, the electronic control unit 60 is disabled from reading this signal and switches to a backup mode in which it is run from the camshaft sensor signal alone until the next time the ignition is switched on, at which time the crankshaft sensor signal is checked again. In the backup mode, the falling and rising edges in the camshaft sensor signal produced by the edges 22 to 25 replace the reference pulses normally derived from the crankshaft sensor signal and are used to calculate the engine speed and position. As will be apparent, the electronic control unit 60 is normally set to detect the falling edges of the signal from the camshaft sensor 50 (so as to detect the edges 22, 23, 25, 28), apart from when the edge 28 has just been detected at which the electronic control unit 60 is set temporarily to receive a rising edge (so as to detect the edge 24) and thereby to find the synchronisation point, as described below.

Of course, when the camshaft wheel 10 is used to determine the timing of engine operating events, the camshaft wheel 10 should be aligned as accurately as possible with respect to the crankshaft, in other words with respect to the position of the engine. This can be achieved by, for example, accurate alignment of the camshaft wheel 10 during assembly of the engine or by determining the position of the camshaft wheel 10 relative to the crankshaft 54 after it has been fitted to the camshaft 12, and then calculating the position of the edges 22 to 25 relative to top dead centre of their respective cylinders.

However, since use of the edges 22 to 25 is generally not as accurate as use of the teeth of the toothed wheel 52, in part due to the reduced number of pulses produced in each engine cycle and to the fact that the engine position is derived from the camshaft 12 instead of the crankshaft 54, the engine is run in a manner which is less dependant on very accurate timing of fuel injection and spark production. Other non-essential functions which operate in dependence upon the state of the engine are disabled.

The principal changes made in the backup mode to the routine used for normal engine running are as follows:
i) a default spark advance table is used in place of the normal spark advance table so as to allow for the reduced timing accuracy. The default table is similar to the table for a 91 octane fuel (which provides a smaller spark advance) but is calibrated to avoid excess spark retardation which could lead to overheating of the catalytic converter (if such is fitted);
ii) the speed of the engine (RPM) is limited to a reference speed, provided with a degree of hysteresis, since high engine speeds are more sensitive to the accuracy of the timing of engine operating events; however, it is preferable that such limiting of the engine takes into account the reduced safety caused by the limited engine speed/power available to the driver;
iii) cylinder co-ordinated electronic spark control is disabled as a result of the degradation in accuracy of spark timing;
iv) idle air control proportional and derivative steps, which enable the fast control of the idle air, is disabled as such a function can cause unstable idling when based on the less accurate measures derived from the camshaft sensor signal;
v) exhaust gas recirculation is disabled;
vi) mass air flow is calculated at each camshaft sensor signal input, that is at the detection of edges 22 to 25, to account for the fact that during normal running of the engine mass air flow is calculated on teeth 22 and 52 of the crankshaft sensor signal;
vii) an indicator, such as a check engine light, is enabled to warn the driver of the malfunction; and
viii) if provided, the air conditioning clutch is disabled to prevent any possible problems therewith.

The above remedial action may be modified to suit the particular application.

For the engine to operate in the backup mode, that is from the camshaft sensor signal alone, the routine must also be synchronised periodically. This applies when the backup mode is enabled at ignition and also once the engine is running. Synchronisation is carried out every two engine revolutions when the engine is running, while during start-up of the engine, the camshaft sensor signal is checked continuously until synchronisation occurs.

During such synchronisation, use is made of portion 26 of the camshaft wheel 10, which produces a plurality of irregular periods, shown in Figure 3b as c, y, f, x and d. Periods x and c, however, are combined during running of the engine in the backup mode to create a period of substantially the same length as periods a, b and e, that is of substantially 180⁰. These irregular periods created by the portion 26 of the wheel 10 are used in the following manner for synchronisation:
i) when the engine starts with the camshaft sensor 50 in a position falling in the period a (Figure 3b), the electronic control unit 60 will in turn detect edge 23 of slot 16, edge 25 of slot 18 and edge 28, thereby obtaining the periods b, c and x. If the conditions c<b/2 and x>c are found to apply, the electronic control unit 60 determines that the synchronising point has been found and that cylinder 4 is approaching top dead centre;
ii) when the engine starts with the camshaft sensor 50 in a position falling in the period b, the electronic control unit 60 will in turn detect edge 25 of slot 18, edge 28 and edge 22 of slot 14 (since synchronisation has not yet occurred, the input to the electronic control unit 60 will not be set to detect rising edges after edge 28 so it will not detect edge 24), thereby obtaining the periods c and d. If it finds that condition d>c*3 applies, it determines that cylinder 2 is approaching top dead centre;
iii) when the engine starts with the camshaft sensor 50 in a position falling within period c, no synchronisation is possible until the sensor moves through period a; and
iv) when the engine starts with the camshaft sensor 50 in a position falling in the period d, no synchronisation is possible until the sensor moves through period a.

Of course, only one of the conditions of i) above is necessary to determine the synchronising point although in this embodiment both are tested to prevent any error, caused for example by noise in the camshaft sensor signal or extreme acceleration or deceleration in the engine speed.

The relationships c<b/2, x>c and d>c*3, may be modified to take into account sensor specifications and manufacturing capabilities which, for example, might affect the actual location of edge 28 relative to the other critical edges of the wheel.

As mentioned above, the electronic control unit 60 also tests the operation of the camshaft wheel 10 and camshaft sensor 50 to detect any failure thereof. With the above-described camshaft wheel 10, the operation of the camshaft wheel 10 and camshaft sensor 50 can be tested in any one of three possible ways. Two of these ways apply during running of the engine in the backup mode and are based on the incorrect detection of the camshaft synchronisation signal, and the third applies during normal operation of the engine, that is when the engine is running from the crankshaft signal. These are as follows (with reference to Figure 3):
1.
   (a) when the synchronisation edge 28 is detected but the condition x>c is not met, a cam malfunction counter is incremented;
   (b) each time one of the edges 22 to 25 and 28 is detected, an edge counter is incremented. If the conditions c<b/2 and x>c are not met and the edge counter is not equal to 5, then the cam malfunction counter is incremented. However, if the conditions c<b/2 and x>c (that is, a "good camshaft sync" has been obtained) are met and the edge counter is equal to 5, the cam malfunction counter is reset to zero;
      when the cam malfunction counter reaches a predetermined value, the electronic control unit 60 determines that there is failure of the camshaft wheel 10, camshaft sensor 50 or of the associated wiring;
2. when the engine is running from the crankshaft sensor signal, if the camshaft sensor signal has not changed state for more than a predetermined number of engine synchronization events, measured from the crankshaft sensor signal, the electrical control unit 60 determines that there is failure of the camshaft wheel 10, camshaft sensor 50 or of the associated wiring.

Once it has been determined that such a malfunction has occurred, the engine will continue running and a check engine light will be switched on. However, when there has been a malfunction of both the camshaft sensor signal and the crankshaft sensor signal, fuel and spark delivery are ceased.

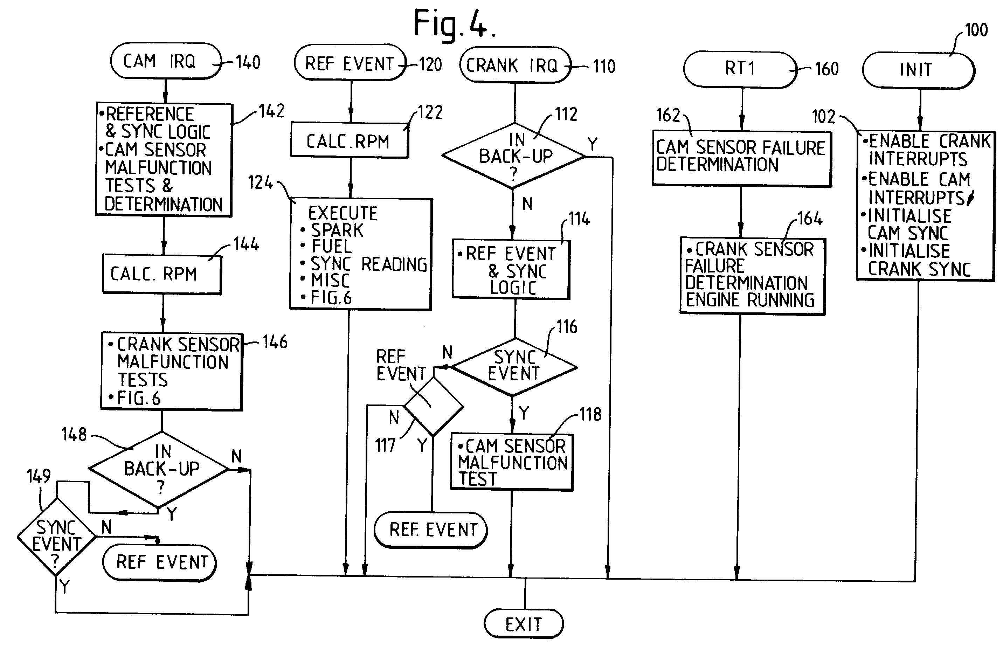

Examples of flow charts showing in detail the steps of an embodiment of routine for determining the state of operation of the crankshaft and camshaft sensors, their signals and associated components, and for finding the synchronising points, are shown in Figures 4 to 6. It will be apparent to the skilled person that the embodiment of routine described below has been chosen to ensure that as many of the routines as possible are common to both the normal running mode and the backup mode.

Referring to Figure 4, an overview of the principle subroutines which are performed during startup and running of the engine are shown.

The initialisation routine 100 is performed on the detection of a transition from a state when the ignition is switched off to a state where the ignition is switched on. The principle functions performed by the initialisation subroutine 100 are to enable the electronic control unit 60 to receive interrupts provided by the crankshaft sensor signal, to enable the electronic control unit 60 to receive only the falling edge interrupts of the camshaft sensor signal provided by the edges 22, 23, 25 and 28 of the camshaft wheel 10, and to initialise synchronisation (so as to determine the engine position) from the camshaft and/or crankshaft wheel 10. Once the initialisation sub-routine 100 has been performed, the electronic control unit 60 operates on the basis of the other four subroutines shown in Figure 4.

In general terms, once the engine starts turning, the following functions are executed, functionally in parallel. A) Synchronisation of the crankshaft sensor signal followed by calculation of the engine speed; B) synchronisation of the crankshaft sensor signal followed by calculation of the engine speed; C) diagnostics on the camshaft sensor signal and crankshaft sensor signal inputs; D) if the camshaft sensor signal is deemed to be unreliable, normal running mode is continued from the crankshaft sensor signal, fuel injection being, possibly, out of phase and the "check engine" warning being activated; E) if the crankshaft sensor signal is deemed to be unreliable, the backup mode is enabled with the necessary remedial action being taken; F) if both sensor signals are deemed unreliable, spark ignition and fuel injection are disabled; G) if both sensor signals are deemed to be reliable, the camshaft sensor signal edge interrupts are disabled and the camshaft sensor signal is then used as a discrete input (to determine whether the camshaft sensor signal is high or low when tooth number 1 of the crankshaft wheel is detected).

The crank interrupt subroutine 110, cam interrupt subroutine 140 and reference event subroutine 120 are linked in the manner shown in Figures 4.

The crank interrupt subroutine 110 is performed several times per engine revolution on the basis of a series of interrupts provided by the crankshaft sensor signal to the electronic control unit 60, and enables the electronic control unit 60 to operate in a normal mode. The first step 112 determines whether the electronic control unit 60 is operating in the backup mode, as enabled by a failure of the crankshaft sensor signal and, if this is so, the crank interrupt subroutine 110 is exited immediately. On the other hand, if the electronic control unit is not in the backup mode, the subroutine 110 passes to step 114 at which the electronic control unit 60 performs a series of logic steps for use in controlling the various synchronous events of the engine on the basis of the crankshaft sensor signal.

At step 116, the subroutine determines whether or not a synchronisation event has occurred. If this is the case, the routine passes to step 118 to execute a camshaft sensor malfunction test, independently of the backup function. On the other hand, if no synchronisation event has occurred, the routine passes to step 117 to determine if a reference event has occurred, in which case the routine passes to the reference event subroutine 120. If no reference event has occurred, the routine exited, although in practical embodiments the routine would pass to one of a number of subroutines not related to this disclosure, such as a dwell subroutine or a mass air flow sensing subroutine.

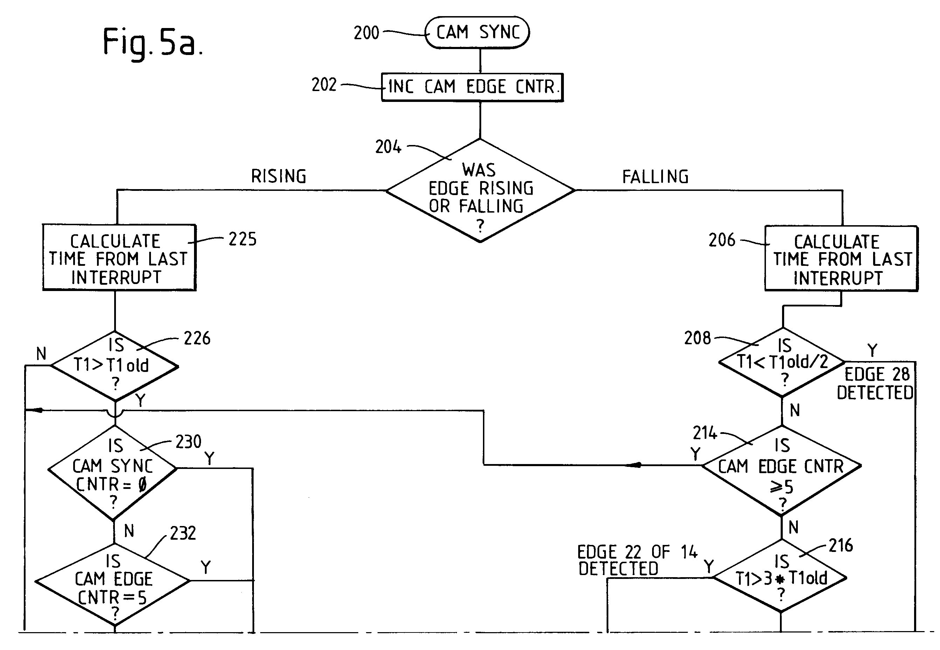

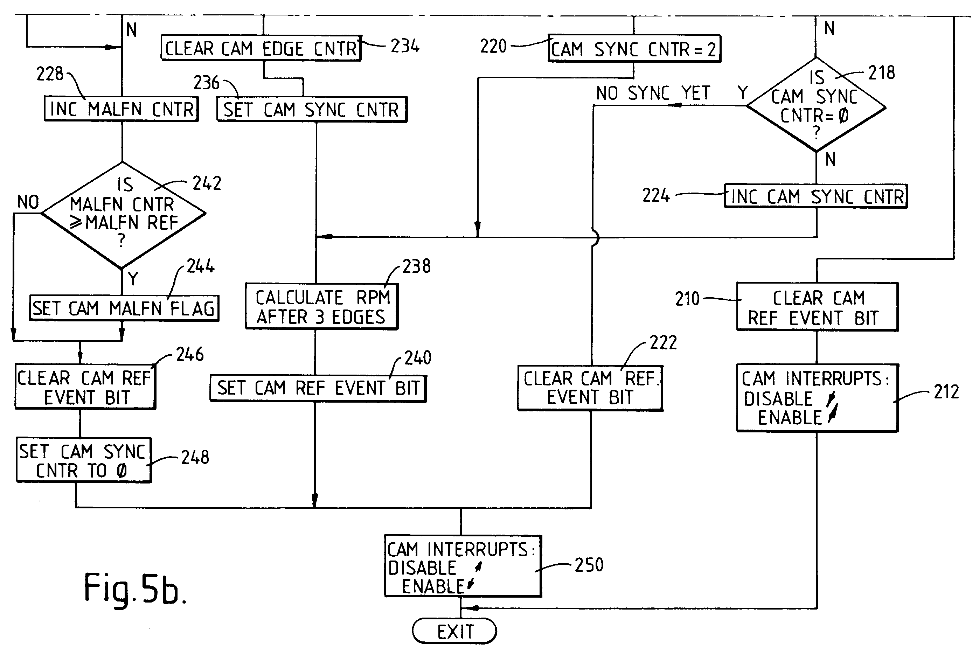

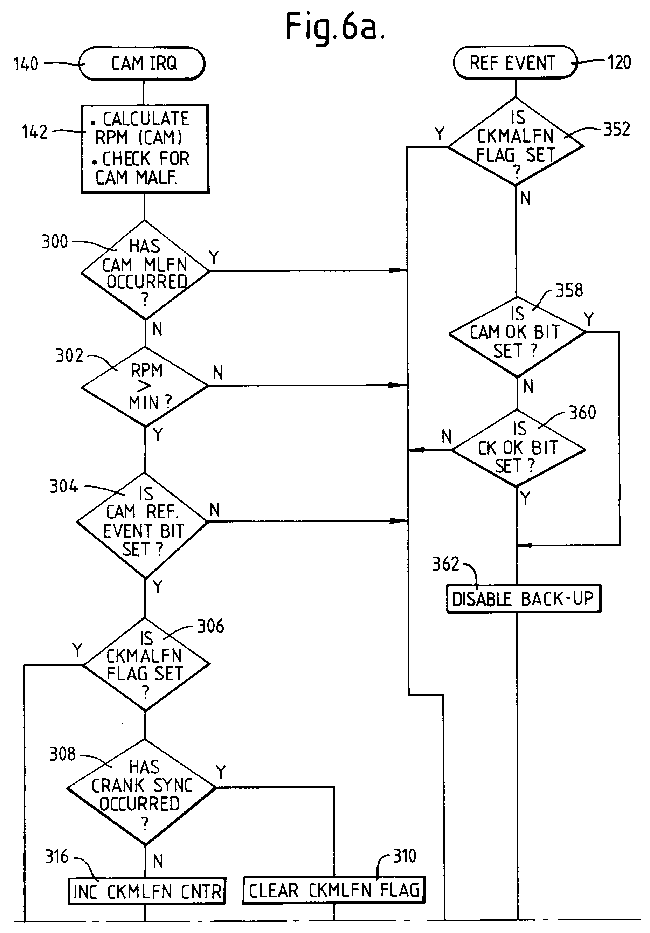

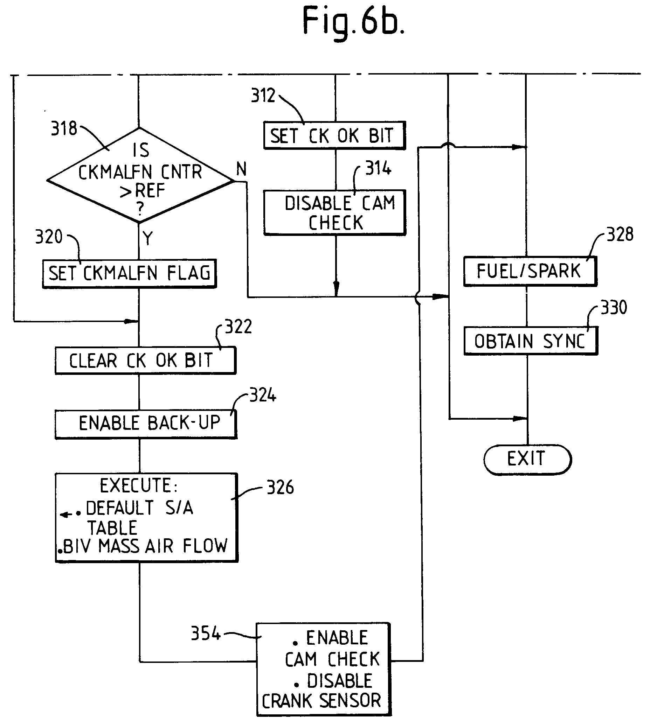

The cam interrupt subroutine 140 is executed during start up only if the crankshaft sensor signal is deemed to be reliable, continuously if the crankshaft sensor signal is determined not to be reliable and on the occurrence of a camshaft wheel edge. This subroutine 140 begins at step 142 at which synchronisation of the engine is first determined from the camshaft sensor signal and cam sensor malfunction tests, carried out in order to check the reliability of the camshaft sensor signal and described in further detail below in connection with Figures 5a and 5b. At step 144, the subroutine 140 calculates the speed of the engine on the basis of the camshaft sensor signal. At step 146 the subroutine 140 determines whether there is any malfunction in the crankshaft sensor signal, described in further detail below with reference to Figures 6a and 6b.

The approach adopted in this embodiment is to assume that the crankshaft sensor signal is reliable until proven otherwise and, until this proven, calculations for spark advance, fuel and the like are not controlled from the camshaft interrupt routine 140. If the electronic control unit 60 is in the backup mode, the routine passes to the reference event subroutine 120 if no synchronsing event has occurred, so as to control the engine on the basis of the camshaft sensor signal. If no synchronising event has occurred, the routine is exited after step 149. On the other hand, if electronic control unit 60 is not in the backup mode, as will be the case during start up before completion of the system diagnostics, the subroutine is exited.

The reference event subroutine 120 is common to both the normal running mode and to the backup mode. This subroutine 120 basically performs the calculations for the fuel injection timing and ignition timing, and obtains the engine synchronisation points, described in further detail below in connection with Figures 6a and 6b.

The fifth subroutine is a real time interrupt subroutine 160 performed every 7.8 milliseconds and multiples thereof and includes a first step 162 at which the camshaft sensor signal is checked and, when appropriate, the electronic control unit 60 is enabled to read the falling edge interrupts in the camshaft sensor signal. At step 164, the subroutine 160 determines the reliability of the crankshaft sensor signal during running the engine, as described above.

The initialisation subroutine 100 and real time interrupt subroutine 160, in addition to performing a plurality of other tasks, determine in a stall condition (where there has not been a transition from a state when the ignition is switched off to a state where the ignition is switched on) that the operating system previously used is maintained (that is the normal mode or backup mode) and a re-check of the signals from the camshaft and crankshaft wheels is not made. However, when there has been a transition from a state where the ignition is switched off to a state where the ignition is switched on, the system will re-evaluate the crankshaft and camshaft sensor signals.

Referring now to Figures 5a and 5b, the camshaft malfunction logic performed in step 142 of the cam interrupt subroutine 140 is shown in further detail in these Figures. This subroutine 140 is also used to find the relevant camshaft wheel edges 22 to 25 during the backup mode. As will be apparent, this subroutine 200 operates during the cam backup mode or during the crank mode until the crankshaft sensor signal synchronises.

This subroutine 200 operates on the basis of two time periods, a first time period T1 obtained as the difference between the time of the edge triggering the subroutine 200 and the previous edge, and a second time period T1old obtained as the difference between the previous edge and the edge prior to the previous edge.

The first step in this subroutine 200 is step 202 at which the edge counter is incremented irrespective of whether the last edge was rising or falling. Step 204 determines the path taken in the routine on the basis of whether the edge was a rising or falling edge. If the edge was a falling edge, step 206 calculates the time elapsed (T1) from the previous detected interrupt (T1old), and if this time is determined at step 208 to be less than T1old/2 (to find whether the condition c<b/2 applies) edge 28 is deemed to have been detected and the subroutine proceeds to steps 210 and 212. Step 210 clears a cam REF EVENT BIT so as not to execute the reference event logic 120, and step 212 sets the electronic control unit 60 to read the rising edges of the camshaft sensor signal, so as to detect the edge 24.

On the other hand, if step 208 determines that the time elapsed (T1) is not less than T1old/2 (indicating that the synchronising edge 28 has not been found and hence that c<b/2 does not apply) the subroutine proceeds to step 214 which determines whether the count reached by the edge counter is greater than or equal to 5 (the total number of edges which should be read in a revolution of the cam shaft 12 between synchronising edges 28) and if this is the case, indicating that there has been an error in the camshaft sensor signal, the subroutine proceeds to a step 228 at which the camshaft malfunction counter is incremented. However, if the count of the camshaft edge counter is less than 5, step 216 determines whether T1>3*T1old (to find whether the condition d>3*c applies) and if this is the case, edge 22 of the first slot 14 is deemed to have been detected and the subroutine proceeds to step 220 to set the cam counter to 2 to point to a specific cylinder, as is described below. Steps 238 and 240 then calculate the engine speed after the detection of three camshaft wheel edges (which provide a more accurate measure than two edges only) and set the cam REF EVENT BIT so as to determine that the REF EVENT logic is to be executed.

If the result at step 216 is negative, step 218 determines, if the cam sync counter is at zero, that no synchronisation point has been detected since engine start up, and the subroutine proceeds to step 222 to clear the cam REF EVENT BIT to determine that the REF EVENT logic will not be executed. However, if 218 determines that the sync counter is not at zero, then it is deemed that edge 23 of slot 16 or edge 25 of slot 18 has been detected, and the routine proceeds to step 224 to increment the cam sync counter, on the basis that there has been synchronisation, and then proceeds to steps 238 and 240.

Returning to step 204, if the edge is a rising edge, as enabled by the edge 28 detection logic at step 212, the subroutine proceeds to step 225 to re-calculate the time period T1 and saves the former time period T1 as the current period T1old. If the period T1 is not greater than T1old (indicating that condition x>c does not apply) the subroutine proceeds to step 228 to increment the camshaft malfunction counter. However, if T1 is greater than T1old, the subroutine proceeds to steps 230 and 232 in which, if the sync counter is equal to O, or the sync counter is not equal to O and the edge counter is equal to 5, it is determined that edge 24 has just been detected and the subroutine passes to steps 234 and 236 to clear the edge counter and to set the sync counter to 1.

However, if the determinations at steps 230 and 232 are negative, the malfunction counter is incremented at step 228 on the basis that a malfunction has occurred, and step 242 compares the count reached by the malfunction counter to a reference value. If this value has been reached or exceeded, the subroutine proceeds to set the camshaft malfunction flag, step 244, to disable the electronic control unit 60 from reading the camshaft sensor signal. However, if this value has not been reached, the subroutine proceeds to steps 246 and 248 to clear the cam REF EVENT BIT and to set the sync counter and the IRQ counter to zero.

Steps 222, 240 and 248 lead to a step 250 which enables the electronic control unit 60 to read the falling edges of the camshaft sensor signal, before leaving the subroutine.

The camshaft sync counter mentioned above, is used in the backup mode to control the timing, with respect to engine position, of fuel injection and spark production. In the preferred embodiment, when the cam REF EVENT BIT is set, two of the following events are made to occur in dependence upon the count reached by the camshaft sync counter:

| Sync Counter | Injection | Next Spark |
|---|---|---|
| 0 | NONE | NONE |
| 1 | CYL3 | CYL4 |
| 2 | CYL4 | CYL2 |
| 3 | CYL2 | CYL1 |
| 4 | CYL1 | CYL3 |

Of course, this table is only an example of an engine having a firing order of 4-2-1-3, and will change if the order of firing of the cylinders is changed or the injection timing with respect to engine position is different (and will be expanded for an engine having more than 4 cylinders). The cam edge interrupt subroutine 140 is shown in further detail in Figures 6a and 6b. After step 142 (that is, the subroutine 200), a cam malfunction flag is checked at step 300 and if this is set, the subroutine is left. However, if the flag is not set, the subroutine checks at step 302 whether the engine speed is greater than the minimum speed, 60 RPM in this example, and if this is not the case, the subroutine is left as it is not possible reliably to test the crankshaft sensor signal. If the engine speed is greater than the minimum speed, step 304 determines whether the cam REF EVENT BIT is set, indicative of the fact that synchronisation by means of the camshaft signal has occurred. This allows the crank malfunction check to be done.

At step 306, which is reached if the cam REF EVENT BIT is set, it is determined whether synchronisation by means of the crankshaft sensor signal has occurred, and if this is the case, step 310 clears the crankshaft malfunction counter, step 312 sets the crankshaft OK BIT to 1 and step 314 disables the camshaft check subroutine since the crankshaft sensor signal is not faulty.

However, if no synchronisation point from the crankshaft sensor signal has been found at step 308, step 316 increments the crankshaft malfunction counter and step 318 then checks the count reached by this counter against a reference value. If the count has not reached the reference value, the subroutine is left on the basis that it cannot yet be determined with certainty that there is a fault with the crankshaft sensor signal. However, if the count has reached or exceeded the reference value, step 320 sets the crankshaft malfunction flag, step 322 clears the crankshaft OK BIT and steps 324 and 326 enable the backup mode. At step 354, the cam sensor check tests are enabled and the electric control unit 60 is set so as not to operate from the crankshaft sensor signal, apart from carrying out periodic checks to determine whether the crankshaft sensor signal has become reliable once again. The timing of the engine operating events and obtaining of the synchronisation points in steps 328 and 330 are then carried out on the basis of the camshaft sensor signal.

The reference event subroutine 120 is shown in further detail in Figures 6a and 6b, as can be seen, is adapted to disable the cam sensor input to the electronic control unit 60 for current or for future use if, for example, the camshaft sensors signal is deemed to be functioning incorrectly.

Step 352 of this subroutine checks the crankshaft malfunction flag and, if this is set, the subroutine is exited without delivering fuel and spark. If, on the other hand, the malfunction flag is not set, step 358 checks the camshaft OK BIT. If the camshaft OK BIT is set, which indicates that there is a malfunction with the camshaft sensor or the components associated with it, the subroutine proceeds to step 362 to disable the cam sensor input. However, if the camshaft OK BIT is not set, the routine proceeds to step 360 to check whether the crankshaft OK BIT is set and if so then proceeds to step 362. If the crankshaft OK BIT is not set, the routine is exited immediately. The camshaft sensor signal, although disregarded, is continuously monitored in the crank interrupt subroutine 110 and if it is subsequently found to be functioning correctly, is re-instated.

Thus, the routine continually checks the state of the crankshaft sensor signal while it is deemed not to be faulty, and then runs in a backup mode on the basis of the camshaft sensor signal upon the detection of a fault in the crankshaft sensor signal. Additionally, if a fault is detected in the camshaft sensor signal, the routine disables the backup mode, shutting down the engine if necessary.

As will be apparent to the skilled person, the design of the wheel and of the appropriate software can be changed to accommodate different configurations of wheel as dictated by manufacture of the wheel or sensor supplier. For example, the wheel may be designed for optical sensing, may be a metallic surface secured to a disc of plastics or other suitable material, or may have an inverted form to the one shown in Figure 1, that is may have the slots and outer portions of the wheel exchanged.

Furthermore, as will be apparent, the design of the wheel 10 will probably change in dependence upon the number of cylinders in the engine.

The disclosures in British patent application no. 9223918.5 from which this application claims priority, and in the abstract accompanying the application are incorporated herein by reference.

## Claims

1. A method of controlling the timing of engine operating events in an engine comprising crankshaft sensing means (52,56) adapted to sense the position of the engine crankshaft (54); camshaft sensing means (10,50) including a camshaft wheel (10) rotatable with the engine camshaft (12) and adapted to indicate whether the engine is in a first half or a second half of an engine cycle and to provide an indication of the position of individual pistons during an engine cycle, and a camshaft wheel sensor (50) adapted to produce a first signal indicative of whether the engine is in the first or second half of a cycle and a second signal indicative of the position of the pistons; and processing means (60) adapted to determine the timing of engine operating events on the basis of the engine position; the method comprising the steps of determining whether the crankshaft sensor signal is faulty or otherwise unreliable; and determining the position and speed of the engine and controlling the timing of engine operating events on the basis of (a) the crankshaft sensing means and the first signal from the camshaft sensor when the crankshaft sensing means is determined not to be faulty or otherwise unreliable, and (b) the second signal from the camshaft sensor when the crankshaft sensing means is determined to be faulty or otherwise unreliable.

2. A method according to claim 1, wherein the crankshaft sensing means is adapted to produce a crankshaft synchronising signal, the method comprising the step determining that the crankshaft sensing means is faulty or otherwise unreliable when a crankshaft synchronising signal is not produced within a preset period.

3. A method according to claim 2, comprising the step of determining that the crankshaft sensing means is faulty or otherwise unreliable when the crankshaft synchronising signal is not produced within the preset period a predetermined number of times.

4. A method according to claim 2 or 3, wherein the method includes the step of measuring the engine speed and determining that the crankshaft sensing means is unreliable if engine speed is less than a predetermined minimum engine speed.

5. A method according to claim 4, comprising the step of determining from the second signal from the camshaft sensor whether the engine speed is greater than the predetermined minimum speed.

6. A method according to any preceding claim, wherein the camshaft wheel comprises camshaft synchronising means (26) adapted to cause the second signal to include a camshaft synchronising signal, the method comprising the step of synchronising the processing means to the engine position on the basis of the camshaft synchronising signal when the engine speed is below a or the minimum engine speed or when the crankshaft sensor signal is determined to be faulty or otherwise unreliable.

7. A method according to claim 6, comprising the step of determining that the camshaft sensing means is faulty or otherwise unreliable when the second signal does not include the camshaft synchronising signal.

8. Apparatus for controlling the timing of engine operating events comprising crankshaft sensing means (52,56) adapted to sense the position of the engine crankshaft (54); camshaft sensing means (10,50) including a camshaft wheel (10) rotatable with the engine camshaft (12) and adapted to indicate whether the engine is in a first half or a second half of an engine cycle and the position of individual pistons during an engine cycle, and a camshaft wheel sensor (50) adapted to produce a first signal indicative of whether the engine is in the first or second half of a cycle and a second signal indicative of the position of individual pistons; and processing means (60) adapted to determine whether the crankshaft sensing means is faulty or otherwise unreliable, and to determine the engine position and to control the timing of engine operating events on the basis of (a) the sensed crankshaft position and the first signal from the camshaft wheel sensor when the crankshaft sensing means is not deemed to be faulty or otherwise unreliable, and (b) the second signal from the camshaft wheel sensor when the crankshaft sensing means is deemed to be faulty or otherwise unreliable.

9. Apparatus according to claim 8, wherein the camshaft wheel is adapted to cause the second signal from the camshaft wheel sensor to include a plurality of pulses each indicative of the position of an associated piston, and to cause the first signal to have a first level when the engine is in the first half of a cycle and a second level when the engine is in the second half of a cycle.

10. Apparatus according to claim 9, wherein the crankshaft sensing means is adapted to produce a crankshaft synchronising signal every revolution of the engine crankshaft, the first signal from the camshaft wheel sensor having the first level at the occurrence of a first crankshaft synchronising signal and the second level at the occurrence of the subsequent crankshaft synchronising signal.

11. Apparatus according to claim 8, 9 or 10, wherein the camshaft wheel comprises camshaft synchronising means (26) adapted to cause the second signal from the camshaft wheel sensor to include a camshaft synchronising signal every revolution of the camshaft wheel.

12. A camshaft wheel adapted to be fitted to an engine camshaft for rotation therewith and to be used with an engine control unit to control the timing of engine operating events, comprising a first portion (20) adapted in use to indicate that the engine is in a first half of the engine cycle, a second portion adapted in use to indicate that the engine is in a second half of the engine cycle; a plurality of indicating means (22-25) spaced substantially regularly around the camshaft wheel, each indicating means being adapted to indicate the position of an engine piston; and synchronising means (28) for use in synchronising the engine control unit to the indicating means.

13. A camshaft wheel according to claim 12, wherein the camshaft wheel has formed therein a plurality of spaced indentations (14-20), each indentation including a first edge which during normal rotation of the camshaft wheel is a leading edge of the indentation and a second edge which during normal rotation of the camshaft wheel is a trailing edge of the indentation, each indicating means including the first and/or second edges of an indentation.

14. A camshaft wheel according to claim 12 or 13, wherein the synchronising means (28) comprises a synchronising indentation (20) including a synchronising edge (28), the synchronising edge having a spacing different to the spacing between each indicating means.

15. A camshaft wheel according to claim 14, wherein the synchronising edge is, during normal rotation of the camshaft wheel, the leading edge of the synchronising indentation; a first of the indicating means (24) forming the trailing edge of the synchronising indentation, each of the other indicating means forming the leading edge of a respective indentation.

16. A camshaft sensor according to any one of claims 12 to 15, wherein the second portion is an indentation (20) in the camshaft wheel.

17. A camshaft sensor according to claim 16, wherein the indentation forming the second portion is the or a synchronising indentation of the camshaft wheel.
